# EUROPEAN PATENT SPECIFICATION

(11) **EP 3 659 736 B1**
(45) Date of publication and mention of the grant of the patent: **05.01.2022**
(21) Application number: 19211938.6
(22) Date of filing: 27.11.2019
(51) Int. Cl.: B23K 11/11, B23K 11/20, B23K 26/38

(54) **METHOD TO JOIN MATERIALS WITH A DIFFERENT MELTING TEMPERATURE**
VERFAHREN ZUM FÜGEN VON MATERIALIEN MIT UNTERSCHIEDLICHEN SCHMELZTEMPERATUREN
PROCÉDÉ POUR JOINDRE DES MATÉRIAUX AVEC UNE TEMPÉRATURE DE FUSION DIFFÉRENTE

(30) Priority: 27.11.2018 IT 201800010611
(43) Date of publication of application: 03.06.2020
(73) Proprietor: Universita' Degli Studi Dell'Aquila, 67100 L'Aquila (IT)
(72) Inventor: LAMBIASE, Francesco, 67100 L'AQUILA (IT); PAOLETTI, Alfonso, 67100 L'AQUILA (IT)
(74) Representative: Bosman, Cesare

(56) References cited:
- DE-A1-102012 000 692
- DE-C- 740 695
- US-A- 5 783 794

## Description

### TECHNICAL FIELD

The present invention concerns a method to mechanically join materials with a different melting temperature.

In particular, the present invention concerns the mechanical joining of electrically conductive materials which can have very different melting temperatures.

### BACKGROUND ART

Multi-material hybrid structures are used in a vast range of applications including transport, electronics, and in the civil and biomedical fields. In fact, the possibility of combining different materials results in improved performance of the resulting structure. In this context there is the need to effectively join materials characterized by very different mechanical, physical and thermal characteristics.

This type of joint is generally obtained by means of two types of processes: adhesive joints and/or mechanical joints. Although commonly adopted, both these solutions have drawbacks. For example, adhesive joints show a high resistance to shear stress, and poor resistance to peeling stress. To remedy this problem, the edge to be joined is appropriately shaped in order to increase the performance of the adhesive joints. The adhesive joints furthermore require long and costly surface pre-treatments. Said processes can be either mechanical (removal of the surface layer by means of metal brushes, sandblasting etc.) or chemical (use of solvents) and can also entail a significant environmental impact.

Furthermore, in the long term the mechanical characteristics of the adhesive joints are characterized by a high variability and uncertainty.

On the other hand, mechanical joints (riveting, bolting etc.), although widely used in the aeronautical and naval industries, have several limits and problems, including the presence of spot joints around which stress is concentrated, and the adoption of external elements for the joint which result in increased weight of the structure and increased costs.

Furthermore, the majority of mechanical joining processes require preliminary drilling of the metal sheets. Said additional process, in addition to representing a problem in terms of productivity (costs and times), can damage the components.

In recent years, various alternative solutions have been proposed to overcome the above-mentioned limits, which entail the functionalization of one or both of the surfaces to be joined and subsequent thermal-mechanical joining. Processes such as laser assisted joining and friction assisted joining have been used to join different types of materials (metalthermoplastic, metal-composite). In recent years, these processes have been adapted to produce hybrid joints between different metals. However, said solutions are not yet able to provide satisfactory results in terms of mechanical characteristics and production times. Said problems are even more evident when materials characterized by high thermal conductivity (e.g. aluminium) are joined, in which a large part of the heat is ceded to the surrounding areas.

As is known to a person skilled in the art, the conventional welding processes (e.g. spot welding) do not allow joints to be made between metallic materials with different melting temperatures, since only one of the materials is brought to melting point.

DE 740 695 discloses a method to join, e.g., cam switches made of copper and a light metal by resistance welding, wherein recesses have been made in the copper surface prior to welding. The remaining teeth next to the recesses have a triangular or rectangular shape.

### DISCLOSURE OF INVENTION

The inventors of the present invention have provided a method of joining conductor materials at different melting temperatures, which entails the creation of a plurality of grooves on the surface of the material with a higher melting temperature.

The subject of the present invention is a method for producing a mechanical joint between two conductor materials with different melting temperatures according to claim 1.

Preferably, the method comprises a preliminary cutting step, wherein a plurality of said grooves is provided on the surface of the material with higher melting point.

Preferably, said joining step is carried out by means of a resistance welding, even more preferably by means of a spot welding.

Preferably, said cutting step is carried out by means of a laser technique.

### BRIEF DESCRIPTION OF THE DRAWINGS

An embodiment example is provided below purely for illustrative non-limiting purposes with the aid of the attached figures, in which:
- figure 1 illustrates schematically two steps of the method according to the present invention; and
- figure 2 is a graph relative to the traction tests performed for the example given below.

### BEST MODE FOR CARRYING OUT THE INVENTION

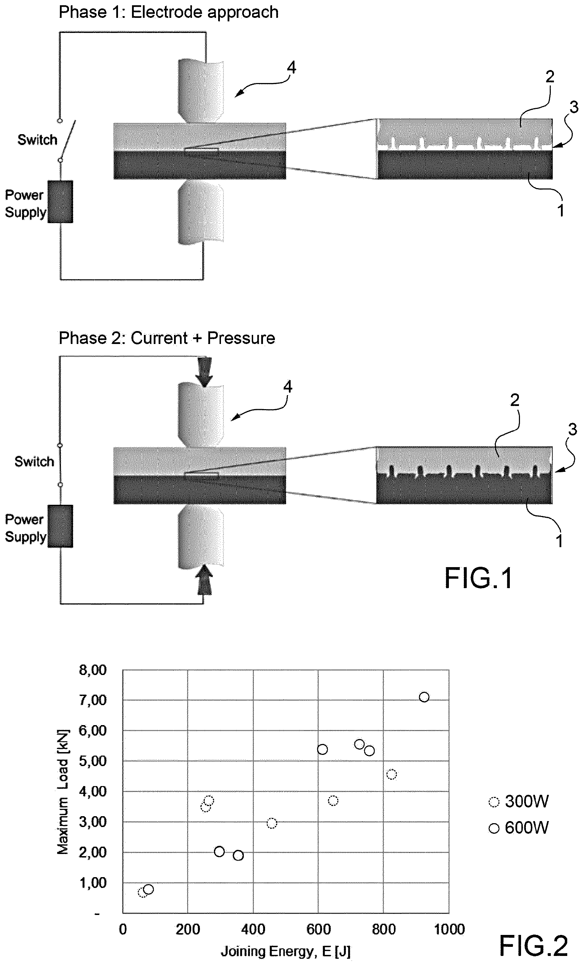

The method subject of the present invention was carried out by coupling an aluminium alloy sheet 1 (AA7075) and a titanium sheet 2 (grade 2). The sheets 1 and 2 of the two materials (both having thickness of 2 mm) were joined by overlap, as shown in Fig. 2.

The main mechanical and thermal characteristics of the materials are given in Table I.

**TABLE I**

| Material | Young Modulus [GPa] | Yield Strength [MPa] | Tensile Strength [MPa] | Elongation at rupture [%] | Melting Point [°C] |
|---|---|---|---|---|---|
| Titanium | 120 | 394 | 450 | 20 | 1670 |
| Aluminium | 67 | 468 | 650 | 8.4 | 635 |

From Table I the considerable difference between the melting points of the two materials can be seen. This makes any melting-based welding process ineffective.

On the titanium sheet 2 a plurality of grooves 3 were made by means of a pulsed fibre laser (YLP-RA30-1-50-20-20 by IPG) as shown in Fig. 1. The plurality of grooves resulted in a square texture using the following process parameters:
- pulse frequency: 30 kHz;
- scanning speed: 1000 mm/s;
- hatch distance (distance between two consecutive scanning lines): 0.3 mm;
- 40 repetitions.

The joining step was carried out by means of a spot welder 4 and copper electrodes with diameter of 10 mm. An experimental test program was carried out in which both the power was varied between 300W and 600W and the welding duration between 0.2 and 1.5 s.

Subsequently, traction tests were carried out to evaluate the mechanical characteristics of the joints. For said purpose a universal test machine model 322.121 by MTS was used equipped with a loading cell with capacity of 25 kN.

The results of said traction tests are reported in the graph of figure 3, where it is possible to correlate the joining energy used with the maximum traction load. As is known, the joining energy E was calculated as a product of duration × power.

From the graph shown in Fig. 3, it can be clearly seen that the strength of the joints reaches very high values (even higher than 7 kN) corresponding to a modulus of rupture of 160 MPa with very short joining times (1.4 s). This shows that the method according to the present invention guarantees the production of joints with very promising mechanical performance. Furthermore, it should be underlined that the method subject of the present invention can be easily implemented and, at the same time, is characterized by a high productivity and reduced energy requirements. Said advantages are due to the low joining times (the heat does not diffuse radially), while the joining area is the one characterized by maximum electrical resistance (due to the presence of the texture which reduces the contact surface).

As illustrated in figure 2, the joining mechanism is based on heating of the material with a lower melting temperature and penetration thereof into the grooves made (or already present) in the material with a higher melting temperature.

Lastly, it is important to note that the particular heating system by passage of current according to the method of the present invention provides the following advantages:
1) Very low cycle times linked to the high power and localisation of the heating in the joining area (the presence of the texture reduces the contact surface and increases the electrical resistance of this area).
2) Limited thermally altered area and modest residual tensions. Furthermore, in the case of metallic materials, reduced swelling of the grains is obtained due to:
   a. Low heating times;
   b. Low temperatures (it is not necessary to reach the melting temperature but only softening of the low-melting material).

In this way, high mechanical (static, fatigue) characteristics are obtained and high resistance to corrosion.
3) Low cost of the heating system.
4) Easy integration in existing production systems since the welders already present can be used.

## Claims

1. A method to mechanically join two conductor materials (1, 2) with a different melting temperature; said method comprising, in succession
- a contact step, during which a surface of a material with a higher melting temperature (2), where there are grooves (3), is arranged in contact with a surface of a material with a lower melting temperature (1), and
- a joining step, during which the two materials are subjected to a coupling pressure and, at the same time, are crossed through by a current at the plurality of grooves (3) until the grooves (3) are filled with said material with a lower melting temperature;
said method being **characterized in that** said grooves (3) have an undercut profile.

2. The method according to claim 1, **characterized in that** it comprises a preliminary cutting step, during which a plurality of said grooves (3) are obtained on the surface of the material with a higher melting temperature (2).

3. The method according to any one of the preceding claims, **characterized in that** said joining step is carried out by means of a resistance welding (4).

4. The method according to claim 3, **characterized in that** said resistance welding is a spot welding (4).

5. The method according to claim 2, **characterized in that** said preliminary cutting step is carried out by means of a laser technique.

## Patentansprüche

1. Verfahren zum mechanischen Fügen von zwei Leitermaterialien (1, 2) mit unterschiedlicher Schmelztemperatur; wobei das Verfahren nacheinander
- einen Kontaktschritt, bei dem eine Oberfläche eines Materials (2) mit höherer Schmelztemperatur, in dem sich Rillen (3) befinden, mit einer Oberfläche eines Materials (1) mit niedrigerer Schmelztemperatur in Kontakt gebracht wird, und
- einen Fügeschritt umfasst, bei dem die beiden Materialien einem Kopplungsdruck ausgesetzt und gleichzeitig von einem Strom in der Vielzahl der Rillen (3) durchflossen werden, bis die Rillen (3) mit dem Material mit niedrigerer Schmelztemperatur gefüllt sind;
wobei das Verfahren **dadurch gekennzeichnet ist, dass** die Rillen (3) ein hinterschnittenes Profil aufweisen.

2. Verfahren nach Anspruch 1, **dadurch gekennzeichnet, dass** es einen vorbereitenden Schneideschritt umfasst, bei dem man eine Vielzahl der Rillen (3) auf der Oberfläche des Materials (2) mit einer höheren Schmelztemperatur erhält.

3. Verfahren nach einem der vorhergehenden Ansprüche, **dadurch gekennzeichnet, dass** der Fügeschritt mittels einer Widerstandsschweißvorrichtung (4) durchgeführt wird.

4. Verfahren nach Anspruch 3, **dadurch gekennzeichnet, dass** die Widerstandsschweißvorrichtung eine Punktschweißvorrichtung (4) ist.

5. Verfahren nach Anspruch 2, **dadurch gekennzeichnet, dass** der vorbereitende Schneideschritt mittels einer Lasertechnik durchgeführt wird.

## Revendications

1. Procédé pour joindre mécaniquement deux matériaux conducteurs (1, 2) ayant des points de fusion différents ; ledit procédé comprenant, successivement
- une étape de contact, durant laquelle une surface d'un matériau ayant un point de fusion plus élevé (2), où il y a des rainures (3), est disposée en contact avec une surface d'un matériau ayant un point de fusion plus bas (1), et
- une étape de jonction, durant laquelle les deux matériaux sont soumis à une pression de couplage et, en même temps, sont traversés par un courant au niveau de la pluralité de rainures (3) jusqu'à ce que les rainures (3) soient remplies dudit matériau ayant un point de fusion plus bas ;
ledit procédé étant **caractérisé en ce que** lesdites rainures (3) ont un profil en contre-dépouille.

2. Procédé selon la revendication 1, **caractérisé en ce qu'**il comprend une étape de découpe préliminaire, durant laquelle une pluralité desdites rainures (3) sont obtenues sur la surface du matériau ayant un point de fusion plus élevé (2).

3. Procédé selon l'une quelconque des revendications précédentes, **caractérisé en ce que** ladite étape de jonction est effectuée au moyen d'un soudage par résistance (4).

4. Procédé selon la revendication 3, **caractérisé en ce que** ledit soudage par résistance est un soudage par points (4).

5. Procédé selon la revendication 2, **caractérisé en ce que** ladite étape de découpe préliminaire est effectuée au moyen d'une technique par laser.
